# EUROPEAN PATENT APPLICATION

(11) **EP 4 625 610 A1**
(43) Date of publication of application: **01.10.2025**
(21) Application number: 25159449.5
(22) Date of filing: 21.02.2025
(51) Int. Cl.: H01M 10/48, H01M 50/204, H01M 50/296, H01M 50/503, H01M 50/507, H01M 50/569, H01M 50/691, H01M 50/588, H01M 50/59

(54) **BATTERY MODULE**

(30) Priority: 25.03.2024 KR 20240040547
(71) Applicant: SAMSUNG SDI CO., LTD., Yongin-si, Gyeonggi-do 17084 (KR)
(72) Inventor: CHO, Mansik, 17084 Yongin-si, Gyeonggi-do (KR); KIM, Hyunkook, 17084 Yongin-si, Gyeonggi-do (KR); HYUN, Seungjoo, 17084 Yongin-si, Gyeonggi-do (KR); CHAE, Minyoung, 17084 Yongin-si, Gyeonggi-do (KR); JO, Yeongseon, 17084 Yongin-si, Gyeonggi-do (KR)
(74) Representative: Gulde & Partner

(57) **Abstract**

A battery module including banks connected in parallel or in series to each other, each of the banks including battery cells electrically connected in parallel to each other, a sensing tab configured to measure a voltage of each of the battery cells in each of the banks, and a high-voltage bus bar configured to make an electrical connection to another battery module. The high-voltage bus bar includes an insulating band including a synthetic resin that is an electrical nonconductor configured to electrically insulate the high-voltage bus bar from the sensing tab.

## Description

### BACKGROUND

### 1. Field

One or more embodiments relate to a battery module.

### 2. Description of the Related Art

A secondary battery can be charged and discharged, unlike a primary battery that cannot be recharged. Low-capacity secondary batteries are used in small portable electronic devices such as smartphones, feature phones, laptop computers, digital cameras, and camcorders, and high-capacity secondary batteries are used as motor-driving power sources, power-storing batteries, etc. for hybrid electric vehicles, battery electric vehicles, etc. a secondary battery may include an electrode assembly including a cathode and an anode, a case accommodating the electrode assembly, an electrode terminal connected to the electrode assembly, among other components.

Generally, a battery pack can be used to store energy for an energy storage system (ESS) or an electric vehicle (EV). The EV may include, for example, a hybrid electric vehicle (HEV), a plugin hybrid electric vehicle (PHEV), or a battery electric vehicle (BEV).

The battery pack may be configured by coupling a plurality of battery modules to one another. The battery module may be manufactured by electrically connecting a plurality of battery cells to each other and accommodating them in a case. The battery cells of the battery module may include banks forming an electrically parallel structure. A plurality of banks may be connected in an electrically serial manner. The electrically serial connection between the banks may be achieved by a high-voltage bus bar. A voltage of each battery cell of the bank may be measured by a low-voltage sensing tab. In this structure, if the high-voltage bus bar and the sensing tab are electrically connected to each other, an electrical short may occur, and thus, the battery module may be damaged. In a related art structure, physical contact between the high-voltage bus bar and the sensing tab and/or an unexpected electrical connection therebetween due to moisture, etc., may damage the battery module.

The above information disclosed in the technology section that serves as the background of the present disclosure is only for improving the understanding of the background of the present disclosure, and thus may include information that does not constitute related art.

### SUMMARY

The present invention is set out in the appended set of claims, wherein the drawings and respective description relate to advantageous embodiments thereof.

The present invention provides a battery module including banks in which an insulating structure between a high-voltage bus bar and a low-voltage sensing tab is configured to prevent (or at least mitigate) an electrical short between the high-voltage bus bar and the low-voltage sensing tab.

Additional aspects will be set forth in part in the description which follows and, in part, will be apparent from the description, or may be learned by practice of the presented embodiments of the present disclosure.

According to the invention, a battery module includes banks connected in parallel or in series to each other, each of the banks including battery cells electrically connected to each other in parallel, a sensing tab configured to measure a voltage of each of the battery cells of the banks, and a high-voltage bus bar configured to make an electrical connection to another battery module. The high-voltage bus bar includes an insulating band including a synthetic resin that is an electrical nonconductor configured to electrically insulate the high-voltage bus bar from the sensing tab.

The battery module according to the present invention is able to prevent an electrical short between the high-voltage bus bar and the low-voltage sensing tab and thus prevents damage to the battery module.

The insulating band may cover at least a portion of a bottom surface and at least a portion of a top surface of the high-voltage bus bar in a thickness direction of the high-voltage bus bar.

The insulating band may have a loop-shaped cross-section structure extending around a circumference of the high-voltage bus bar.

The insulating band may be coupled to the high-voltage bus bar by insert-injection.

The insulating band may include polyamide (PA6).

The high-voltage bus bar and the sensing tab may be perpendicular to each other.

The sensing tab may be electrically connected to a flexible printed circuit board (FPCB) on a holder bus bar on the battery cell.

The holder bus bar may be under the sensing tab, and a drainage space configured to discharge water formed by moisture generated around the sensing tab may be on a top surface of the holder bus bar.

The drainage space may be concave in the top surface of the holder bus bar and form a channel structure extending toward an edge of the holder bus bar.

A bottom surface of the drainage space may be sloped downward toward the edge of the holder bus bar from the sensing tab.

The battery module may include two or more drainage spaces parallel to each other.

A longitudinal direction of the drainage space and a longitudinal direction of the sensing tab may be perpendicular to each other.

The drainage space is formed in the holder bus bar as well as the insulating band.

### BRIEF DESCRIPTION OF THE DRAWINGS

The above and other aspects, features, and advantages of certain embodiments of the present disclosure will be more apparent from the following description taken in conjunction with the accompanying drawings.
FIG. 1 shows a three-dimensional structure of a battery module according to one or more embodiments of the present disclosure;
FIG. 2 shows a state of the battery module of FIG. 1 in which a high-voltage bus bar is separated;
FIG. 3 is a cross-sectional view of the battery module of FIG. 1 taken along a line III - III shown in FIG. 1;
FIG. 4 shows an arrangement structure of a drainage structure according to one or more embodiments of the present disclosure; and
FIG. 5 is a cross-sectional view of the battery module of FIG. 1 taken along a line V - V shown in FIG. 1.

### DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description. As used herein, the term "and/or" includes any and all combinations of one or more of the associated listed items.

Hereinafter, embodiments of the present disclosure will be described in detail with reference to the accompanying drawings. The terms and words used in the present specification and claims described above should not be construed as being limited to ordinary or dictionary meanings, and should be interpreted as meanings and concepts consistent with the technical idea of the present disclosure based on the principle that the present inventors may appropriately define the concept of the terms to describe their invention in the best way. Therefore, it should be understood that the configurations shown in the drawings and embodiments described in this specification are merely the most preferred embodiments of the present disclosure, and do not represent all of the technical ideas of the present disclosure, such that there may be various equivalents and variations that replace them at the time of filing the present application. If used herein, "comprise, include" and/or "comprising, including" specify mentioned shapes, numbers, steps, operations, members, components, and/or presence of these groups, and do not exclude the presence or addition of one or more different shapes, numbers, operations, members, components, and /or groups. If embodiments of the present disclosure are described, "can" or "may" may include "one or more embodiments of the present disclosure".

To help understanding of the present disclosure, the accompanying drawings are not shown according to the actual scale, but the dimensions of some components may be exaggerated. The same reference numeral may be given to the same component in different embodiments.

The statement that two comparison targets are 'the same' as each other may mean that they are 'substantially the same' as each other. Thus, a case where they are 'substantially the same' as each other may include a case where they have a deviation regarded as a low level, e.g., a deviation of 5 % or less. If a uniform parameter is uniform in a predetermined area, it may mean that it is uniform from an average point of view.

Although first, second, etc., may be used to describe various components, these components are not limited by these terms. These terms are only used to distinguish one component from other components, and unless specifically stated to the contrary, a first component may be a second component.

Throughout the specification, unless specially stated to the contrary, each component may be singular or plural.

If a component is arranged on "a top portion (or a bottom portion)" of another component or "on (or under)" the other component, it may mean not only a case where the component is arranged adjacent to a top surface (or a bottom surface) of the other component, but also a case where another component may be interposed between the other component and the component arranged on (or under) the other component.

If a component is described as being "connected", "coupled", or "connected" to another component, it should be understood that the components are directly connected or connectable to each other, but another component may be "interposed" between the components, or the components may be may be "connected", "coupled", or "connected" to each other through another component. If a portion is electrically coupled to another portion, this may include not only a case where they are directly connected to each other, but also a case where they are connected with another element therebetween.

Throughout the specification, "A and/or B" may mean A, B, or A and B unless specially stated otherwise. That is, "and/or" may include all or any combination of a plurality of items listed. "C to D" may mean at least C but not more than D, unless specially stated otherwise.

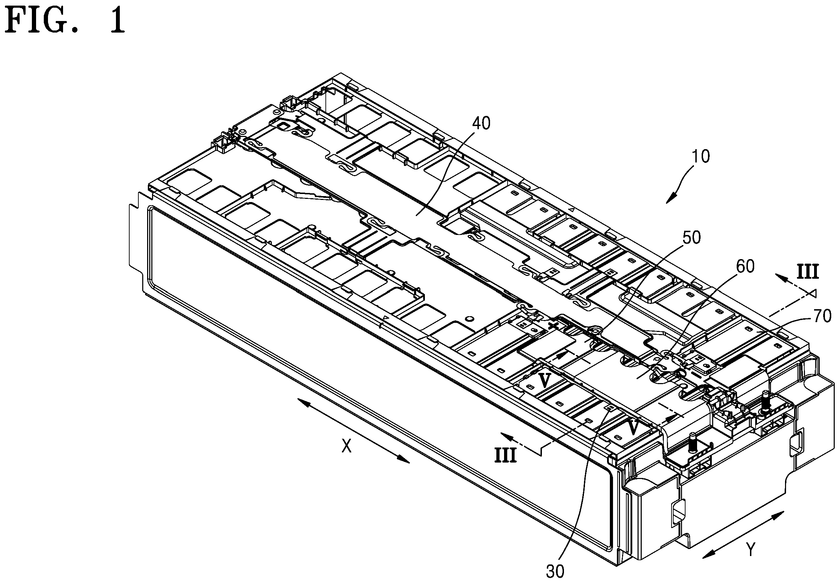

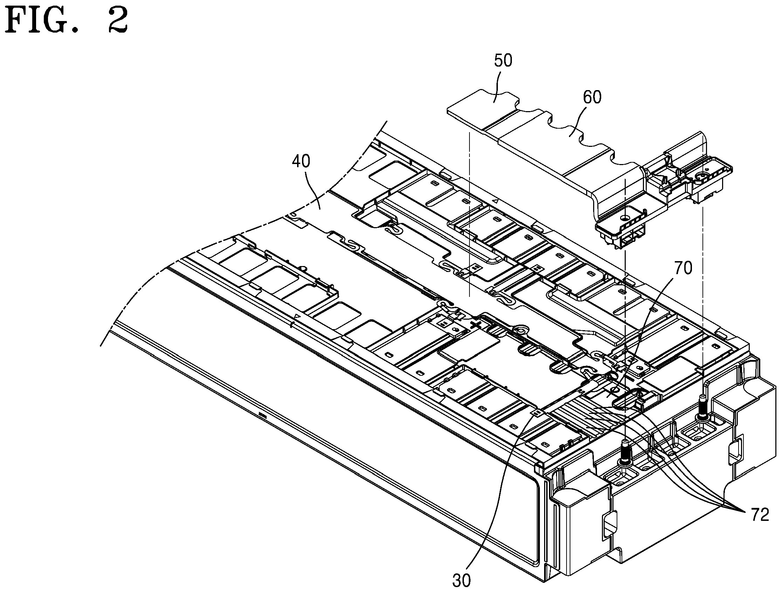

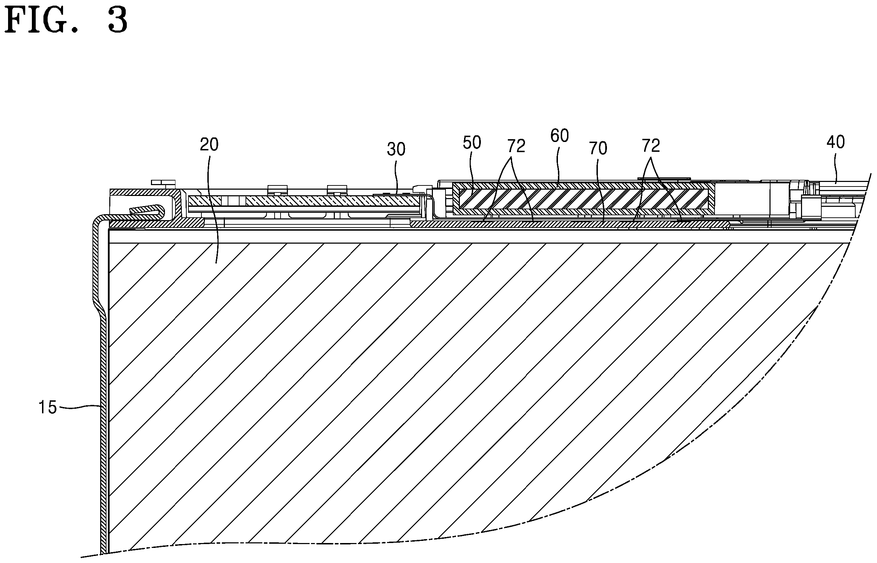

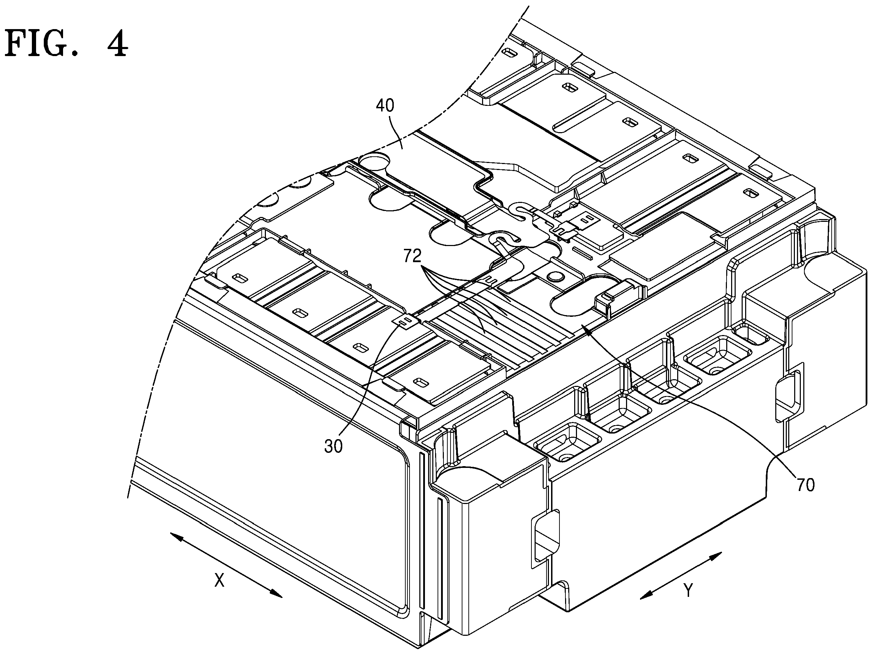

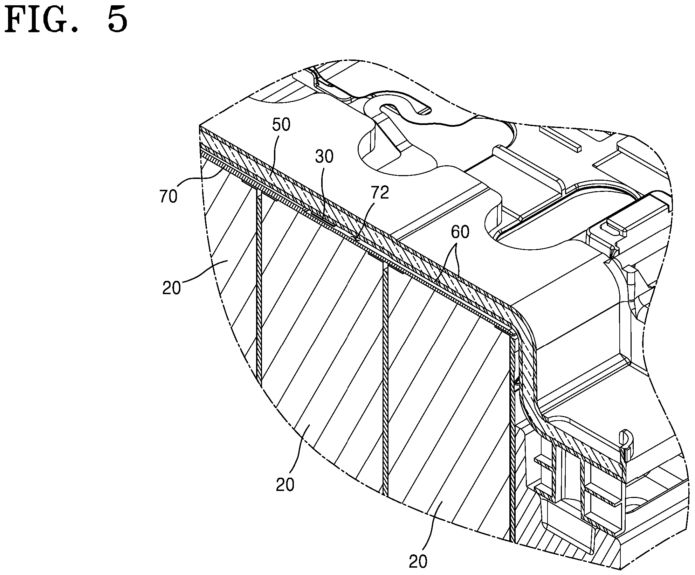

FIG. 1 shows a three-dimensional structure of a battery module 10 according to embodiments of the present disclosure. FIG. 2 shows a state of the battery module 10 in which a high-voltage bus bar 50 is exploded or separated. FIG. 3 is a cross-sectional view cut along a line III - III shown in FIG. 1. FIG. 4 shows a drainage structure according to one or more embodiments of the present disclosure. FIG. 5 is a cross-sectional view of the battery module 10 taken along a line V - V shown in FIG. 1.

Referring to FIGS. 1 to 5, a battery module 10 according to one or more embodiments of the present disclosure may include a plurality of battery cells 20, a sensing tab 30, a flexible printed circuit board (FPCB) 40, a holder bus bar 70, a high-voltage bus bar 50, and an insulating band 60.

The plurality of battery cells 20 may be accommodated in a case 15 (as shown in FIG. 3). The case 15 may include a heat-dissipating hole to discharge heat generated in the battery cell 20 to outside. Each of the battery cells 20 may be a prismatic battery cell. The plurality of battery cells 20 may be sequentially stacked in a first direction X. The battery module 10 may form a bank (or a plurality of banks) in which the plurality of battery cells 20 are electrically connected to one another. The bank may be configured, for example, by electrically parallel connection of eight battery cells 20. A plurality of banks may be electrically serially connected to one another to increase a voltage. The battery module 10 may be configured in a structure (8P2S) in which eight battery cells are electrically connected in parallel to constitute one bank and two banks are electrically connected in series. In one or more embodiments, the plurality of banks may be connected in parallel.

The sensing tab 30 may be an electrical element configured to measure a voltage of each battery cell 20. The sensing tab 30 may be electrically connected to some of the battery cells 20 forming one bank. The sensing tab 30 may be electrically connected to the FPCB 40 described below. The sensing tab 30 may be or include a low-voltage circuit. The sensing tab 30 may extend in a second direction Y. The second direction Y may be perpendicular to the first direction X.

The FPCB 40 may be a battery protection device configured to monitor a state of the battery cell(s) 20 of the battery module 10 and to control a charging/discharging state of the battery cell(s) 20. The FPCB 40 may be on the battery module 10. In one or more embodiments, the sensing tab 30 may be electrically connected to the FPCB 40 on the holder bus bar 70, which is on the battery cell 20. The FPCB 40 may include a connector electrically connected to a battery bank.

The FPCB 40 and the sensing tab 30 may be on a top surface of the holder bus bar 70. The holder bus bar 70 may cover a top portion of the battery cell 20. The holder bus bar 70 may include an electrically non-conductive material. The holder bus bar 70 may include an insulating synthetic resin. The holder bus bar 70 may be configured to fix a position of the upper portion of the battery cell 20.

The high-voltage bus bar 50 may be configured to form an electrical connection between the battery module 10 and another battery module. The high-voltage bus bar 50 may be a conductive member to which a final voltage output from the battery module 10 is applied. The high-voltage bus bar 50 may include a metal material having sufficient electrical conductivity. The high-voltage bus bar 50 may include, for example, a copper or aluminum alloy. The voltage applied to the high-voltage bus bar 50 may be a higher voltage than a voltage applied to the sensing tab 30.

The high-voltage bus bar 50 may be electrically insulated from the sensing tab 30. The high-voltage bus bar 50 may be above the battery module 10. Thus, the sensing tab 30 may be under the high-voltage bus bar 50. The high-voltage bus bar 50 may be fixed to the case 15 by a bolt and a nut, for example.

The high-voltage bus bar 50 and the sensing tab 30 may be perpendicular to each other. A longitudinal direction of the high-voltage bus bar 50 and a longitudinal direction of the sensing tab 30 may form a right angle . In a plan view, the high-voltage bus bar 50 and the sensing tab 30 may intersect each other at a right angle .

The insulating band 60 may be configured to electrically insulate the high-voltage bus bar 50 from the sensing tab 30. The insulating band 60 may include a synthetic resin that is an electrical nonconductor. In one or more embodiments, a material of the insulating band 60 may be polyamide (PA6). The insulating band 60 may be inseparably coupled (e.g., fixedly coupled) to the high-voltage bus bar 50. The insulating band 60 may be configured to cover a bottom surface and a top surface of the high-voltage bus bar 50 in a thickness direction of the high-voltage bus bar 50. As shown in FIG. 3, the insulating band 60 may have a loop-shaped cross-section extending around a circumference (e.g., a periphery or perimeter) of the high-voltage bus bar 50 (e.g., the insulating band 60 may be a loop or hoop shaped structure extending around the high-voltage bus bar 50). In one or more embodiments, the insulating band 60 may be coupled to the high-voltage bus bar 50 by an insert-injection structure or process (e.g., the insulating band 60 may be molded or otherwise formed around the high-voltage bus bar 50).

The holder bus bar 70 may include a drainage space 72. The holder bus bar 70 may be under the sensing tab 30. The drainage space 72 may be on a top surface of the holder bus bar 70. The drainage space 72 may be configured to facilitate discharge of water formed by moisture generated around the sensing tab 30. The drainage space 72 may be concave in the top surface of the holder bus bar 70. The drainage space 72 may form a channel structure extending toward an outer edge of the holder bus bar 70. In one or more embodiments, a bottom surface of the drainage space 72 may slope downward toward the edge of the holder bus bar 70 from the sensing tab 30, which is configured to facilitate smooth drainage.

In one or more embodiments, the holder bus bar 70 may include a plurality of drainage spaces 72 in parallel to each other.

A longitudinal direction of the drainage space 72 and the longitudinal direction of the sensing tab 30 may be perpendicular to each other. In a plan view, the drainage space 72 and the sensing tab 30 may intersect each other at a right angle .

Hereinafter, operation of the battery module 10 including the components as described above will be described in detail based on an assembled state of the battery module 10.

Referring to FIG. 3, the battery module 10 may include the high-voltage bus bar 50 for electrical connection to another adjacent battery module. The high-voltage bus bar 50 may be a member to which a peak voltage is applied in a charging/discharging operation of the battery module. The sensing tab 30 may be a member that measures a voltage of one battery cell 20 or one bank. Thus, a relatively low voltage may be applied to the sensing tab 30. If the high-voltage bus bar 50 and the sensing tab 30 are electrically connected to each other, an electrical short may occur, thereby damaging the battery module 10. Due to the insulating band 60 being provided around the high-voltage bus bar 50, the high-voltage bus bar 50 and the sensing tab 30 may remain electrically insulated from each other at all times. Additionally, be the insulating band 60 is inseparably coupled (e.g., fixedly coupled) to the high-voltage bus bar 50 by the insert-injection structure, the insulating band 60 may not inadvertently separate from the high-voltage bus bar 50. The drainage space 72 may be formed in the holder bus bar 70 as well as the insulating band 60, and thus water may be smoothly discharged through the drainage space 72 even if the water is generated around the sensing tab 30 due to a change in an environment. Therefore, an unexpected electrical short between the high-voltage bus bar 50 and the sensing tab 30 may be prevented (or at least mitigated).

As described above, the battery module according to the present disclosure may include an insulating band that prevents (or at least mitigates against) an electrical short between a high-voltage bus bar electrically connecting battery modules and a sensing tab measuring a voltage of a battery cell or a bank in the battery module, thereby preventing an electrical short between the high-voltage bus bar and the low-voltage sensing tab and thus preventing (or at least mitigating) damage to the battery module.

Moreover, as in embodiments of the present disclosure, a drainage space may be provided in a holder bus bar under the sensing tab to facilitate discharge of water generated by moisture around the sensing tab to outside, thereby more effectively preventing (or at least further mitigating) an electrical short between the high-voltage battery and the sensing tab.

The battery module according to the present disclosure may include an insulating band that prevents an electrical short between a high-voltage bus bar electrically connecting battery modules and a sensing tab measuring a voltage of a bank in the battery module, thereby preventing an unexpected short between the high-voltage bus bar and the low-voltage sensing tab and thus preventing a damage of the battery module.

Moreover, as in embodiments of the present disclosure, a drainage space may be provided in a holder bus bar arranged under the sensing tab to facilitate discharge of water generated by moisture around the sensing tab to outside, thereby more effectively preventing the electrical short between the high-voltage battery and the sensing tab.

It should be understood that embodiments described herein should be considered in a descriptive sense only and not for purposes of limitation. Descriptions of features or aspects within each embodiment should typically be considered as available for other similar features or aspects in other embodiments.

## Claims

1. A battery module (10) comprising:
a plurality of banks connected in parallel or in series to each other, each of the plurality of banks comprising a plurality of battery cells (20) electrically connected to each other in parallel;
a sensing tab (30) configured to measure a voltage of each of the plurality of battery cells (20) of each of the plurality of banks; and
a high-voltage bus bar (50) configured to make an electrical connection to another battery module (10),
wherein the high-voltage bus bar (50) comprises an insulating band (60) comprising a synthetic resin, the insulating band (60) being an electrical nonconductor configured to electrically insulate the high-voltage bus bar (50) from the sensing tab (30).

2. The battery module (10) as claimed in claim 1, wherein the insulating band (60) covers at least a portion of a bottom surface and at least a portion of a top surface of the high-voltage bus bar (50) in a thickness direction of the high-voltage bus bar (50).

3. The battery module (10) as claimed in claim 2, wherein the insulating band (60) has a loop-shaped cross-section extending around a circumference of the high-voltage bus bar (50).

4. The battery module (10) as claimed in any of claims 1 to 3, wherein the insulating band (60) is coupled to the high-voltage bus bar (50) by insert-injection.

5. The battery module (10) as claimed in any of claims 1 to **4,** wherein the insulating band (60) comprises polyamide (PA6).

6. The battery module (10) as claimed in any of claims 1 to 5, wherein the high-voltage bus bar (50) and the sensing tab (30) are perpendicular to each other.

7. The battery module (10) as claimed in any of claims 1 to 6, wherein the sensing tab (30) is electrically connected to a flexible printed circuit board, FPCB, (40) on a holder bus bar (70) on the plurality of battery cells (20).

8. The battery module (10) as claimed in claim 7, wherein the holder bus bar (70) is under the sensing tab (30), and wherein a drainage space (72) is on a top surface of the holder bus bar (70), the drainage space (72) being configured to discharge water formed by moisture generated around the sensing tab (30).

9. The battery module (10) as claimed in claim 8, wherein the drainage space (72) is concave in the top surface of the holder bus bar (70), the drainage space (72) comprising a channel extending toward an edge of the holder bus bar (70).

10. The battery module (10) as claimed in claim 9, wherein a bottom surface of the drainage space (72) is sloped downward from the sensing tab (30) toward the edge of the holder bus bar (70).

11. The battery module (10) as claimed in claim 9, wherein the drainage space (72) comprises a plurality of drainage spaces (72), and wherein the plurality of drainage spaces (72) is parallel to each other.

12. The battery module (10) as claimed in claim 9, wherein a longitudinal direction of the drainage space (72) and a longitudinal direction of the sensing tab (30) are perpendicular to each other.

13. The battery module (10) as claimed in claim 8, wherein the drainage space (72) is formed in the holder bus bar (70) as well as the insulating band (60).
